# EUROPEAN PATENT APPLICATION

(11) **EP 4 609 984 A1**
(43) Date of publication of application: **03.09.2025**
(21) Application number: 23907753.0
(22) Date of filing: 20.12.2023
(51) Int. Cl.: B23K 26/362, H01M 4/04

(54) **JIG AND MANUFACTURING SYSTEM FOR ELECTRODE COMPRISING SAME**

(30) Priority: 20.12.2022 KR 20220179670; 19.12.2023 KR 20230186390
(71) Applicant: LG Energy Solution, Ltd., Seoul 07335 (KR)
(72) Inventor: KIM, Sang-Yeol, Daejeon 34122 (KR); PARK, Jong-Sik, Daejeon 34122 (KR); KIM, Hak-Kyun, Daejeon 34122 (KR); LEE, Jae-Eun, Daejeon 34122 (KR); LEE, Je-Jun, Daejeon 34122 (KR)
(74) Representative: Goddar, Heinz J.
(86) International application number: PCT/KR2023/021151
(87) International publication number: WO 2024/136470

(57) **Abstract**

A jig according to an embodiment of the present disclosure, which is a jig configured to support an electrode that is transferred along a first direction and includes a coated portion coated with an electrode active material and an uncoated portion not coated with the electrode active material, includes a first support unit configured to support an area corresponding to the uncoated portion in the electrode and including a laser receiving portion formed at a position corresponding to an area irradiated with a laser for cutting the uncoated portion; and a second support unit including at least one support roller configured to support an area corresponding to the coated portion in the electrode.

## Description

### TECHNICAL FIELD

The present disclosure relates to a jig and an electrode manufacturing system including the same.

The present application claims priority to Korean Patent Application No. 10-2022-0179670 filed on December 20, 2022 and Korean Patent Application No. 10-2023-0186390 filed on December 19, 2023 in the Republic of Korea, the disclosures of which are incorporated herein by reference.

### BACKGROUND ART

To manufacture an electrode assembly applied to a secondary battery, a process of partially cutting an electrode may be applied. As a cutting method, for example, laser cutting may be applied. Multiple unit electrodes may be made by cutting a large size of electrode fabric, or a desired shape may be made by partially cutting a specific position of the electrode.

As such, equipment for laser cutting the electrode may be, for example, a drum type equipment or a flying type equipment.

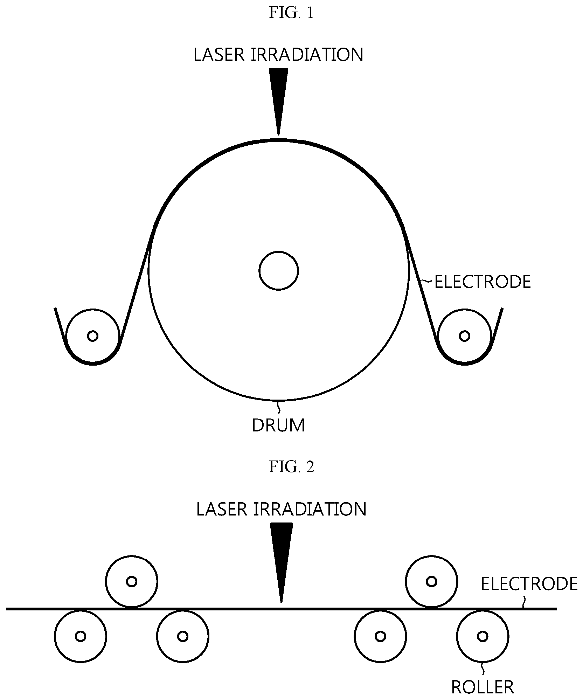

Referring to FIG. 1, a drum type equipment for performing laser cutting is schematically shown. When applying this drum type equipment, the drum directly supports the area where the laser is irradiated in the electrode, thereby having the advantage that stable cutting is possible and the electrode does not shake much while travelling. However, the space for installing the drum should be relatively large when applying this type of equipment, and the laser is irradiated in the area directly supported by the drum, so that the cutting is likely to be incomplete and there is also a concern that the drum may be damaged by the irradiated laser.

Referring to FIG. 2, a flying type equipment for performing laser cutting is schematically shown. When applying this flying type equipment, it has the advantage that there are relatively less spatial restrictions and the electrode is more likely to be completely cut by laser irradiation, compared to a drum type equipment. However, when applying this type of equipment, the electrode may shake much while travelling. If the electrode shakes in this way, it is not easy to set the focal length during laser irradiation, and thus there is a concern that the quality of the manufactured electrode may be degraded.

Therefore, in processing the electrode, there is a need to develop a jig configured to minimize shaking of the electrode while travelling as described above, to prevent the space occupied by the equipment from becoming excessively large, to prevent damage to the equipment due to laser irradiation, and to prevent incomplete cutting due to laser irradiation.

### DISCLOSURE

### Technical Problem

The present disclosure is designed to solve the problems of the related art, and therefore the present disclosure is directed to minimizing the shaking of the electrode while travelling as described above in processing the electrode.

In another aspect, the present disclosure is directed to preventing the space occupied by the equipment from becoming excessively large.

In still another aspect, the present disclosure is directed to preventing damage to the equipment due to laser irradiation.

In still another aspect, the present disclosure is directed to preventing incomplete cutting due to laser irradiation.

In still another aspect, the present disclosure is directed to preventing the electrode from being damaged while travelling.

In still another aspect, the present disclosure is directed to preventing damage to equipment due to travelling friction of the electrode.

In still another aspect, the present disclosure is directed to preventing foreign substances generated during cutting of the uncoated portion due to laser irradiation from scattering to the surrounding area and causing problems.

In still another aspect, the present disclosure is directed to preventing shaking of the electrode in the suction process of foreign substances generated during cutting of the uncoated portion due to laser irradiation.

However, technical problems to be solved by the present disclosure are not limited to the above-described problems, and other problems not mentioned herein may be clearly understood by those skilled in the art from the following description of the present disclosure.

### Technical Solution

A jig according to an embodiment of the present disclosure for solving the above-described problem, which is a jig configured to support an electrode that is transferred along a first direction and includes a coated portion coated with an electrode active material and an uncoated portion not coated with the electrode active material, includes a first support unit configured to support an area corresponding to the uncoated portion in the electrode and including a laser receiving portion formed at a position corresponding to an area irradiated with a laser for cutting the uncoated portion; and a second support unit including at least one support roller configured to support an area corresponding to the coated portion in the electrode.

The laser receiving portion may be a hole penetrating the first support unit or a groove formed on the first support unit by a predetermined depth.

The support roller may be provided in plurality.

The plurality of support rollers may be arranged so that an imaginary curved surface extending to contact each of the outer circumferential surfaces of the plurality of support rollers has substantially the same curvature as one surface of the first support unit facing the uncoated portion.

The imaginary curved surface may be located on substantially the same plane as one surface of the first support unit facing the uncoated portion.

The jig may include a suction unit configured to suck foreign substances generated by laser cutting the uncoated portion passing the first support unit.

The suction unit may be provided outside the first support unit along a direction from the second support unit toward the first support unit.

The suction unit may be configured to suck the foreign substances along a direction from the second support unit toward the first support unit.

The first support unit may have a foreign substances discharge portion that communicates with the laser receiving portion.

The suction unit may be configured to suck air in the foreign substances discharge portion.

The jig may include a scattering blocking unit configured to prevent foreign substances generated by laser cutting the uncoated portion passing the first support unit from scattering into the coated portion.

The scattering blocking unit may be disposed in a boundary area of the first support unit and the second support unit, and may be spaced apart from the first support unit and the second support unit so as to maintain a certain distance from the electrode.

The jig may include a blower unit configured to prevent foreign substances generated by laser cutting the uncoated portion passing the first support unit from scattering toward the second support unit.

An electrode manufacturing system according to an embodiment of the present disclosure may include a jig according to an embodiment of the present disclosure; and a laser irradiation device provided at a location corresponding to the laser receiving portion.

The laser irradiation device may be configured to partially cut the uncoated portion to form a repeated notching pattern on the uncoated portion along the first direction.

### Advantageous Effects

According to one aspect of the present disclosure, it is possible to minimize the shaking of the electrode while travelling as described above in processing the electrode.

According to another aspect of the present disclosure, it is possible to prevent the space occupied by the equipment from becoming excessively large.

According to still another aspect of the present disclosure, it is possible to prevent damage to the equipment due to laser irradiation.

According to still another aspect of the present disclosure, it is possible to prevent incomplete cutting due to laser irradiation.

According to still another aspect of the present disclosure, it is possible to prevent damage to equipment due to travelling friction of the electrode.

According to still another aspect of the present disclosure, it is possible to prevent foreign substances generated during cutting of the uncoated portion due to laser irradiation from scattering to the surrounding area and causing problems.

According to still another aspect of the present disclosure, it is possible to prevent shaking of the electrode in the suction process of foreign substances generated during cutting of the uncoated portion due to laser irradiation.

However, the advantageous effects to be obtained by the present disclosure are not limited to the above-described effects, and other advantageous effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view showing a conventional equipment, which schematically shows a drum type equipment for performing laser cutting.
FIG. 2 is a view showing a conventional equipment, which schematically shows a flying type equipment for performing laser cutting.
FIG. 3 is a view conceptually showing a jig of the present disclosure.
FIG. 4 is a view showing an electrode cut by a jig and an electrode manufacturing system of the present disclosure.
FIG. 5 is a plan view showing a jig of the present disclosure.
FIG. 6 is a view for describing a process of partially cutting an electrode supported by a jig of the present disclosure by irradiating a laser, which shows a cross-section of the jig of FIG. 5 taken along X-X'.
FIG. 7 is a view showing a jig to which a laser receiving portion having a different structure is applied compared to the jig shown in FIG. 5.
FIGS. 8 and 9 are views showing a jig and an electrode of the present disclosure as viewed from the bottom of the jig.
FIG. 10 is a view showing a support roller constituting a second support unit of the present disclosure.
FIG. 11 is a view showing a structure in which a plurality of support rollers constituting a second support unit of the present disclosure are arranged.
FIG. 12 is a view for describing the curvature of an extension line along the arrangement direction of a plurality of support rollers.
FIGS. 13 to 16 are views showing a structure capable of preventing problems caused by scattering of foreign substances generated during cutting of an uncoated portion.
FIG. 17 is a view conceptually showing an electrode manufacturing system of the present disclosure.
FIG. 18 is a view illustratively showing the movement of a laser irradiation device of the present disclosure for forming a cutting line on an electrode.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

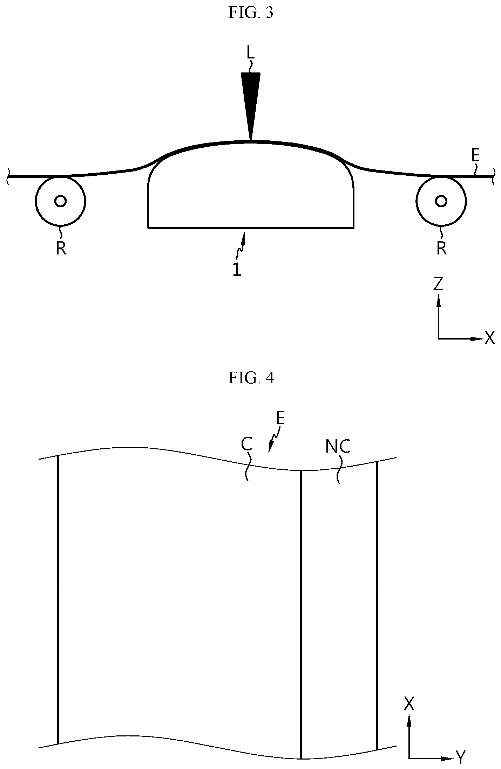

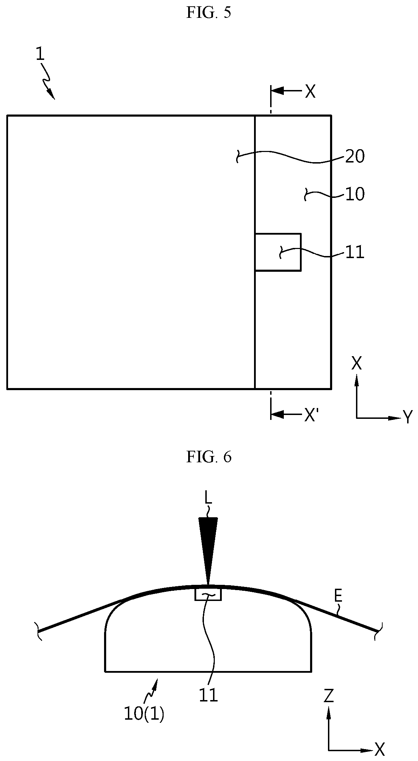

A jig 1 according to an embodiment of the present disclosure will be described with reference to FIGS. 3 to 5. FIG. 3 is a view conceptually showing a jig of the present disclosure, FIG. 4 is a view showing an electrode cut by a jig and an electrode manufacturing system of the present disclosure, and FIG. 5 is a plan view showing a jig of the present disclosure.

Referring to FIGS. 3 to 5, the jig 1 according to an embodiment of the present disclosure may be configured to support an electrode E transferred along a first direction (direction parallel to the X-axis). At least one guide roller R may be provided along the transfer direction of the electrode E for stable transfer of the electrode E. This guide roller R may guide the transfer of the electrode E. The guide roller R may also be a driving roller configured to be rotatable by being connected to a driving device.

The jig 1 may be configured to support the electrode E including a coated portion C coated with an electrode active material and an uncoated portion NC not coated with the electrode active material. The jig 1 may include a first support unit 10 and a second support unit 20.

The first support unit 10 may be configured to support an area corresponding to the uncoated portion NC in the electrode E. The first support unit 10 may extend from one end of the second support unit 20 by a predetermined length along a second direction (direction parallel to the Y-axis) approximately perpendicular to the first direction (direction parallel to the X-axis).

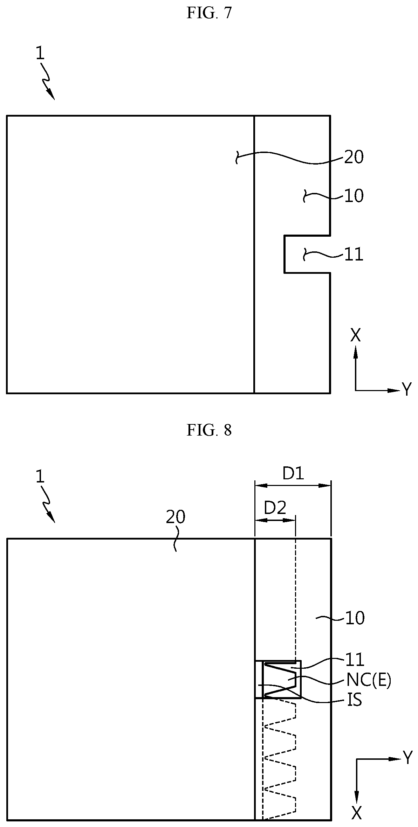

The extension length D1 (see FIG. 8) of the first support unit 10 along the second direction may be formed to be equal to or longer than the distance from the boundary between the uncoated portion NC and the coated portion C to the end of the uncoated portion NC before laser cutting. That is, the extension width (length extended in a direction parallel to the Y-axis) of the first support unit 10 may be formed to be equal to or longer than the height (extension length in the Y-axis direction) of the uncoated portion NC of the electrode E before cutting. Accordingly, the first support unit 10 may stably support the uncoated portion NC as a whole during the transfer of the electrode E. However, the first support unit 10 of the present disclosure is not limited to supporting only the uncoated portion NC. That is, the first support unit 10 of the present disclosure may also be configured to support a part of the coated portion C in addition to the uncoated portion NC.

The second support unit 20 may be configured to support an area corresponding to the coated portion C in the electrode E. The extension length of the second support unit 20 along the second direction (direction parallel to the Y-axis) may be formed to be equal to or longer than the distance from the boundary between the uncoated portion NC and the coated portion C to the end of the coated portion C. That is, the extension width (length extended in a direction parallel to the Y-axis) of the second support unit 20 may be extended to be equal to or longer than the height (extension length in the Y-axis direction) of the coated portion C of the electrode E. Accordingly, the second support unit 20 may stably support the coated portion C as a whole during the transfer of the electrode E. However, the second support unit 20 of the present disclosure is not limited to supporting only the coated portion C. That is, the second support unit 20 of the present disclosure may also be configured to support a part of the uncoated portion NC in addition to the coated portion C.

The first support unit 10 may include a laser receiving portion 11 formed at a position corresponding to an area where the laser L for cutting the uncoated portion NC is irradiated. The electrode E supported by the jig 1 of the present disclosure may be, for example, a double-sided coated electrode in which both surfaces of an electrode current collector are coated with an electrode active material.

As described above, the jig 1 of the present disclosure includes the laser receiving portion 11, so that the laser L may penetrate the uncoated portion NC to make a reliable cutting when the laser L is irradiated to the uncoated portion NC to cut it into a desired pattern. When the laser receiving portion 11 is not provided, one surface of the electrode E irradiated with the laser L and the other opposite surface are supported by the jig 1, and thus there is a possibility that the cutting may be incomplete as the laser L does not penetrate the electrode E.

In another aspect, according to this configuration of the present disclosure, it is possible to prevent the surface of the jig 1 from being damaged by the laser L penetrating the uncoated portion NC, thereby extending the service life of the equipment and also preventing damage to the electrode E passing the surface of the damaged jig 1. Meanwhile, the object of laser cutting in the present disclosure is not limited only to the uncoated portion NC. That is, the object of laser cutting in the present disclosure may also include a part of the coated portion C in addition to the uncoated portion NC.

Next, the shape of the laser receiving portion 11 of the present disclosure will be described with reference to FIGS. 6 and 7 together with FIG. 5. FIG. 6 is a view for describing a process of partially cutting an electrode supported by a jig of the present disclosure by irradiating a laser, which shows a cross-section of the jig of FIG. 5 taken along X-X'. FIG. 7 is a view showing a jig to which a laser receiving portion having a different structure is applied compared to the jig shown in FIG. 5.

First, referring to FIGS. 5 and 6, the laser receiving portion 11 may be a hole penetrating the first support unit 10 or a groove formed on the first support unit 10 by a predetermined depth.

When the laser receiving portion 11 is a hole, the jig 1 may not be damaged by the irradiated laser L. When the laser receiving portion 11 is a groove, the irradiated laser L may damage the inner surface of the groove. However, even in this case, since the electrode E and the damaged part of the jig 1 are not in contact with each other during the transfer of the electrode E, there is no concern of damage to the electrode E.

Referring to FIG. 7, the laser receiving portion 11 may have a shape notched inward from an outer end in the width direction (direction parallel to the Y-axis) of the first support unit 10. This notched shape of the laser receiving portion 11 may be applied to both cases where the laser receiving portion 11 is a groove and where it is a hole.

Referring to FIGS. 3 to 6 again, one surface of the jig 1 facing the electrode E may be configured to have a predetermined curvature along a direction parallel to the first direction, which is the transfer direction of the electrode E. The first support unit 10 and the second support unit 20 may have approximately the same curvature.

When one surface of the jig 1 has a curvature in this way, the electrode E may be in properly close contact with one surface of the jig 1 when passing the jig 1. When the electrode E is not in properly close contact with the jig 1 during the cutting process of the uncoated portion NC by laser L irradiation, it may be difficult to accurately irradiate the laser L to the desired location. In particular, when wrinkles occur on the electrode E, there is a concern that the cutting quality may be degraded as the laser L is not well focused.

The radius of curvature of one surface of the jig 1 facing the electrode E may be approximately 200 mm or more. If the radius of curvature is too small, the difference in the focal length of the laser L for each cutting position may increase when cutting the uncoated portion NC by laser L irradiation, resulting in different cutting quality for each cutting position. Conversely, if the radius of curvature is too large, the electrode E is not in properly close contact with the surface of the jig 1, which may cause tremors during the transfer process.

As described above, when the surface of the jig 1 is configured to have a curvature, the laser receiving portion 11 may be formed at the highest position along the height direction (direction parallel to the Z-axis) of the jig 1. Meanwhile, only the case where the guide roller R guiding the transfer of the electrode E is located below the electrode E is shown in FIG. 3 of the present disclosure, but the present disclosure is not limited thereto. The guide roller R may be disposed above the electrode E at one side and the other side of the jig 1 along the transfer direction (direction parallel to the X-axis) of the electrode E. In this case, the guide roller R may be located lower than the highest position along the height direction (direction parallel to the Z-axis) of the jig 1. In this case, tension may be created on the electrode E by the guide roller R, so that the electrode E may be in properly close contact with the jig 1 at the position where the laser receiving portion 11 is formed.

Although not shown in the drawing, a coating layer may be formed on one surface of the jig 1 of the present disclosure facing the electrode E. The coating layer may be configured to have anti-wear properties and/or friction-reducing properties. The surface of the jig 1 of the present disclosure may be damaged by repeated friction with the electrode E that occurs during the transfer process of the electrode E. In another aspect, the coated portion C of the electrode E may be damaged by frictional force generated during the transfer process of the electrode E, such as the electrode active material falling off.

When a coating layer having anti-wear properties and/or friction-reducing properties is at least partially formed on the surface of the jig 1, damage to the electrode E and/or damage to the jig 1 due to such friction may be minimized.

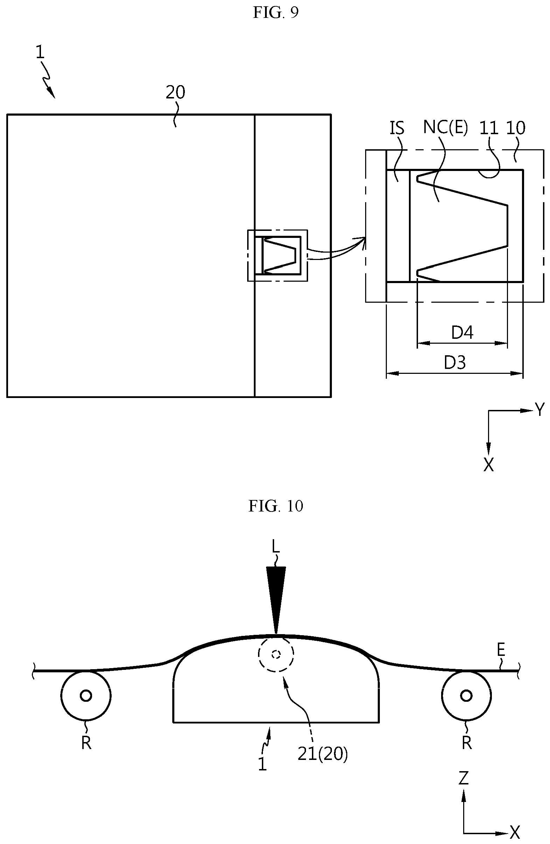

Next, the relationship between the extension width D1 of the first support unit 10 of the present disclosure, the height D2 of the uncoated portion NC after laser cutting, the extension width D3 of the laser receiving portion 11, and the notching depth D4 of the uncoated portion NC by laser cutting will be described with reference to FIGS. 8 and 9. FIGS. 8 and 9 are views showing a jig and an electrode of the present disclosure as viewed from the bottom of the jig.

Referring to FIGS. 8 and 9, the extension width D1 of the first support unit 10 may be determined by considering the overall height (length extended along a direction parallel to the Y-axis) of the uncoated portion NC before laser cutting and the height D2 (length extended along a direction parallel to the Y-axis) of the uncoated portion NC after laser cutting. As described above, the extension width D1 of the first support unit 10 may be formed to be approximately equal to or longer than the overall height of the uncoated portion NC before laser cutting in consideration of the travelling stability of the electrode E.

Meanwhile, the extension width D3 (length extended along a direction parallel to the Y-axis direction) of the laser receiving portion 11 may be determined by considering the notching depth D4 of the uncoated portion NC by laser cutting. Since the electrode E moves only in the first direction (direction parallel to the X-axis), the extension width D3 of the laser receiving portion 11 may be formed to be larger than the notching depth of the uncoated portion NC by laser cutting. When these conditions are satisfied, the process of cutting the uncoated portion NC passing the laser receiving portion 11 into a desired pattern may be performed smoothly.

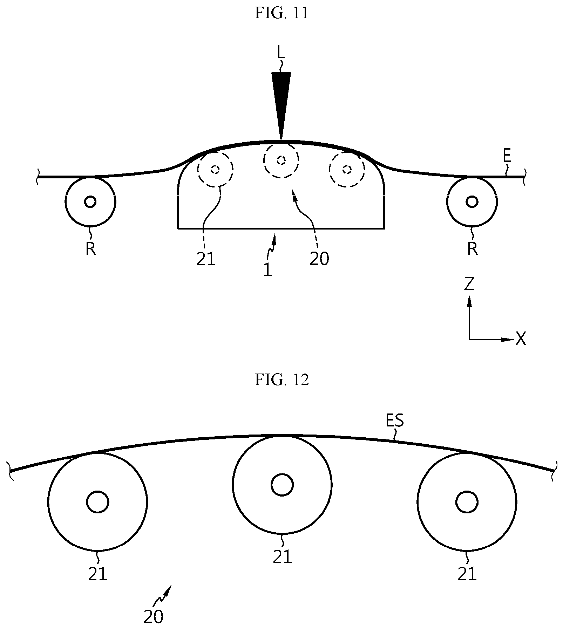

Next, the detailed structure of the second support unit 20 of the present disclosure will be described with reference to FIGS. 10 to 12. FIG. 10 is a view showing a support roller constituting a second support unit of the present disclosure. FIG. 11 is a view showing a structure in which a plurality of support rollers constituting a second support unit of the present disclosure are arranged. FIG. 12 is a view for describing the curvature of an extension line along the arrangement direction of a plurality of support rollers.

Referring to FIGS. 10 to 12 together with FIGS. 4 and 9, the second support unit 20 of the present disclosure may include at least one support roller 21. The support roller 21 may be configured to support an area corresponding to the coated portion C in the electrode E. The support roller 21 may be configured to have a radius of curvature of, for example, approximately 60 mm or more.

When the second support unit 20 includes the support roller 21 in this way, it is possible to prevent the coated portion C of the electrode E passing the jig 1 from being damaged by friction. In order to smoothly cut the uncoated portion NC passing the first support unit 10, the first support unit 10 needs to be configured to be in properly close contact with the uncoated portion NC in the remaining area except for the area where the laser receiving portion 11 is formed. In addition, since the area where the uncoated portion NC is formed in the electrode E is a metal foil, it is in close contact with the first support unit 10 and may not be easily damaged even if a certain degree of frictional force is applied, but the area where the coated portion C is formed has a high risk of damage to the electrode active material when the frictional force is applied. Therefore, it may be more important for the second support unit 20 to reduce the frictional force with the electrode E passing the second support unit 20 rather than to increase the closeness to the electrode E.

When the second support unit 20 of the present disclosure is configured to include the support roller 21 and thereby minimize the frictional force applied to the coated portion C passing the support roller 21 through rolling, the concern of damage to the coated portion C may be greatly reduced.

In the prior art, in order to reduce the risk of damage to the coated portion C, a method of floating the electrode E through air blowing in the area supporting the coated portion C has been applied, but in the case of using this air floating method, there was a problem that an air hole became clogged with foreign substances as the equipment usage time elapsed. When the air hole is clogged with foreign substances in this way, the concern of damage to the coated portion passing the jig may be rather increasing. On the other hand, when the second support unit 20 is configured to reduce the frictional force with the coated portion C by a rolling method as in the present disclosure, this problem may be solved.

The support roller 21 of the present disclosure may be provided in plurality. When the support rollers 21 are provided in plurality in this way, the plurality of support rollers 21 may be arranged so that an imaginary curved surface ES extending to contact each of the outer circumferential surfaces of the plurality of support rollers 21 has substantially the same curvature as one surface of the first support unit 10 facing the uncoated portion NC. In another aspect, the imaginary curved surface ES may be located on substantially the same plane as one surface of the first support unit 10 facing the uncoated portion NC. The plurality of support rollers 21 may be arranged so that the radius of curvature of the imaginary curved surface ES is, for example, approximately 200 mm or more.

When the plurality of support rollers 21 are arranged in such a way that the imaginary curved surface ES has substantially the same curvature as one surface of the first support unit 10, the travelling direction of the coated portion C passing the second support unit 20 and the travelling direction of the uncoated portion NC passing the first support unit 10 may coincide, thereby preventing the occurrence of meandering in the travelling of the electrode E and/or the occurrence of wrinkles in the electrode E.

Meanwhile, the support roller 21 may be connected to a driving device and configured to actively rotate in accordance with the transfer speed of the electrode E. Alternatively, the support roller 21 may also be configured to passively rotate in accordance with the travelling of the electrode E without actively rotating by a separate driving device.

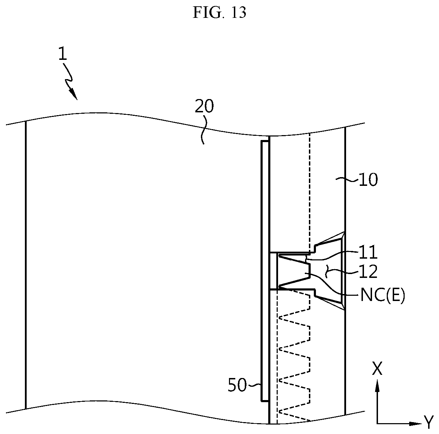

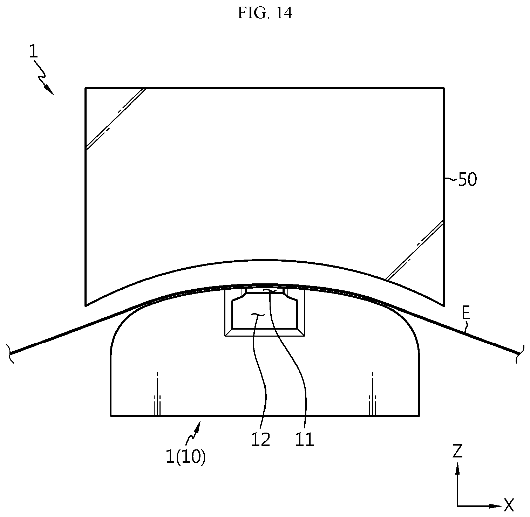

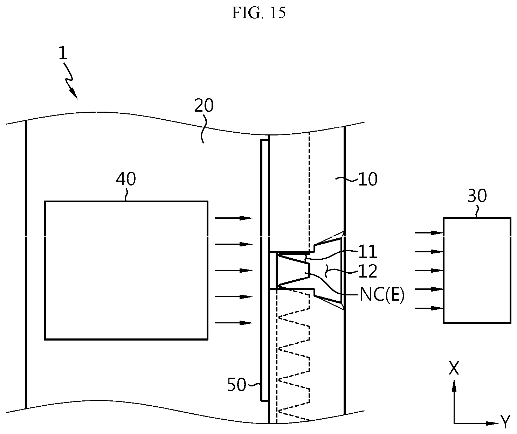

Next, a case where the jig 1 of the present disclosure has a structure capable of preventing problems caused by scattering of foreign substances generated during cutting of the uncoated portion NC will be described with reference to FIGS. 13 to 16.

FIGS. 13 to 16 are views showing a structure capable of preventing problems caused by scattering of foreign substances generated during cutting of an uncoated portion.

Referring to FIGS. 13 to 16, the jig 1 may have a foreign substances discharge portion 12. In another aspect, the jig 1 may include a suction unit 30 and/or a blower unit 40 and/or a scattering blocking unit 50.

In the jig 1, the suction unit 30 may be configured to suck foreign substances generated by laser cutting the uncoated portion NC passing the first support unit 10. The suction unit 30 may be provided outside the first support unit 10 along a direction from the second support unit 20 toward the first support unit 10. The suction portion 30 may be configured to suck foreign substances along a direction from the second support unit 20 toward the first support unit 10. The suction unit 30 may be configured to suck foreign substances to the side of the area where laser cutting is performed, rather than to suck foreign substances to the bottom of the area where laser cutting is performed. In this way, when the jig 1 of the present disclosure includes the suction unit 30, foreign substances generated during laser cutting may be removed by the suction pressure of the suction unit 30, thereby eliminating, for example, the concern of causing problems by scattering foreign substances into the area where the coated portion C is formed. When the suction direction by the suction unit 30 is made laterally rather than downwardly, suction pressure is applied to the electrode E passing the top of the first support unit 10, which may minimize the occurrence of tremors during travelling of the electrode E.

The foreign substances discharge portion 12 may be configured to communicate with the laser receiving portion 11. When the foreign substances discharge portion 12 and the suction unit 30 are provided together, the suction unit 30 may be configured to suck air in the foreign substances discharge portion 12. When the suction unit 30 is configured in this manner, foreign substances may be sucked through the laser receiving portion 11 and the foreign substances discharge portion 12 upon suction of air by the suction unit 30. Meanwhile, in order to ensure that the direction of the suction pressure exerted by the suction unit 30 is lateral, the foreign substances discharge portion 12 may have a shape that is open to the side of the first support unit 10.

The blower unit 40 may be configured to prevent foreign substances generated by laser cutting the uncoated portion NC passing the first support unit 10 from scattering toward the second support unit 20. The blower unit 40 may be disposed on the second support unit 20. The blower unit 40 may be configured to blow air in a direction from the second support unit 20 toward the first support unit 10. When the jig 1 of the present disclosure includes the blower unit 40, it is possible not only to prevent foreign substances generated during laser cutting from accumulating around the laser receiving portion 11, but also to prevent foreign substances from scattering toward the uncoated portion NC.

The scattering blocking unit 50 may be configured to prevent foreign substances generated by laser cutting the uncoated portion NC passing the first support unit 10 from scattering toward the coated portion C. The scattering blocking unit 50 may be disposed at a position corresponding to the boundary area of the first support unit 10 and the second support unit 20. The scattering blocking unit 50 may be positioned upwardly spaced apart from the first support unit 10 and the second support unit 20 so as to maintain a distance from the electrode E. When the scattering blocking unit 50 is positioned upwardly spaced apart from the first support unit 10 and the second support unit 20 in this manner, and when the jig 1 of the present disclosure includes the blower unit 40, it may be possible to transmit blowing pressure to foreign substances generated during laser cutting.

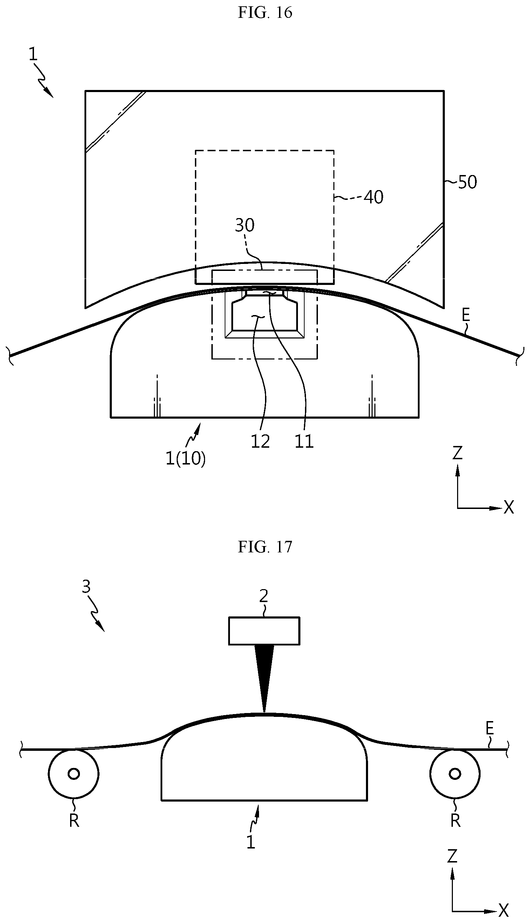

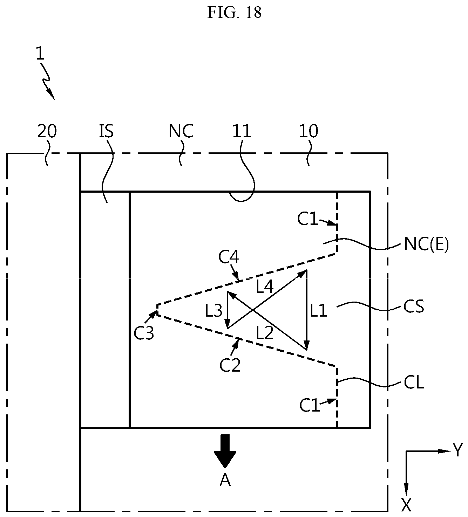

Next, an electrode manufacturing system of the present disclosure will be described with reference to FIGS. 17 and 18. FIG. 17 is a view conceptually showing an electrode manufacturing system of the present disclosure, and FIG. 18 is a view illustratively showing the movement of a laser irradiation device of the present disclosure for forming a cutting line on an electrode.

Referring to FIG. 17, the electrode manufacturing system 3 of the present disclosure may include the jig 1 of the present disclosure as described above and the laser irradiation device 2 provided at a position corresponding to the laser receiving portion 11 formed in the jig 1. The electrode manufacturing system 3 may include the guide roller R for stable transfer of the electrode E transferred along the first direction (direction parallel to the X-axis). The guide roller R may be configured to simply guide the transfer of the electrode E or to provide power for the transfer of the electrode E.

Referring to FIG. 18 together with FIG. 17, the laser irradiation device 2 may be configured to partially cut the uncoated portion NC of the electrode E to form a repeated notching pattern on the uncoated portion NC along the first direction (direction parallel to the X-axis).

For example, when the electrode E is transferred along the direction A, the laser irradiation point by the laser irradiation device 2 may sequentially move along the paths L1, L2, L3, and L4 in a roughly ribbon-like pattern repeatedly. The movement along the path L1 may be a movement in the same direction as the direction A. The movement along the path L2 may be a movement in a direction opposite to the direction A and toward the second support unit 20. The movement along the path L3 may be a movement in the same direction as the direction A. The movement distance along the path L3 may be shorter than the movement distance along the path L1. The movement along the path L4 may be a movement in a direction opposite to the direction A and away from the second support unit 20. The movement distance along the path L4 may be approximately substantially the same as the movement distance along the path L2.

As the laser irradiation point by the laser irradiation device 2 moves sequentially along such paths L1, L2, L3, and L4, a cutting line CL having a specific pattern may be formed on the electrode E moving along the direction A. A first cutting line C1 may be formed by the movement path L1 of the laser irradiation point. A second cutting line C2 may be formed by the movement path L2 of the laser irradiation point. A third cutting line C3 may be formed by the movement path L3 of the laser irradiation point. A fourth cutting line C4 may be formed by the movement path L4 of the laser irradiation point. The cut segment CS formed by the cutting line CL may be removed, for example, by a suction equipment provided separately.

When the traveling speed of the electrode E along the direction A is faster than the speed at which the irradiation point of the laser irradiation device 2 moves, uncoated portion segment pieces having an approximately trapezoidal shape with a longer lower base and a shorter upper base may be formed by cutting the uncoated portion NC according to the movement of the laser irradiation point.

However, the travelling direction and speed of the electrode E as described above, and the moving direction and speed of the laser irradiation point are illustrative, and the present disclosure is not limited thereto.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims.

### [Explanation of Reference Signs]

L: laser
E: electrode
C: coated portion
NC: uncoated portion
CS: cut segment
CL: cutting line
C1: first cutting line
C2: second cutting line
C3: third cutting line
C4: fourth cutting line
A: travelling (transfer) direction of electrode
IS: insulation portion
R: roller
1: jig
10: first support unit
11: laser receiving portion
12: foreign substances discharge portion
D1: extension width of first support unit
D2: height of uncoated portion after laser cutting
D3: extension width of laser receiving portion
D4: notching depth of uncoated portion by laser cutting
20: second support unit
21: support roller
ES: imaginary curved surface
30: suction unit
40: blower unit
50: scattering blocking unit
2: laser irradiation device
L1-L4: movement path of laser irradiation point by laser irradiation device
3: electrode manufacturing system

## Claims

1. A jig configured to support an electrode that is transferred along a first direction and comprises a coated portion coated with an electrode active material and an uncoated portion not coated with the electrode active material, the jig comprising:
a first support unit configured to support an area corresponding to the uncoated portion in the electrode and comprising a laser receiving portion formed at a position corresponding to an area irradiated with a laser for cutting the uncoated portion; and
a second support unit comprising at least one support roller configured to support an area corresponding to the coated portion in the electrode.

2. The jig according to claim 1,
wherein the laser receiving portion is a hole penetrating the first support unit or a groove formed on the first support unit by a predetermined depth.

3. The jig according to claim 1,
wherein the support roller is provided in plurality.

4. The jig according to claim 3,
wherein the plurality of support rollers are arranged so that an imaginary curved surface extending to contact each of the outer circumferential surfaces of the plurality of support rollers has substantially the same curvature as one surface of the first support unit facing the uncoated portion.

5. The jig according to claim 4,
wherein the imaginary curved surface is located on substantially the same plane as one surface of the first support unit facing the uncoated portion.

6. The jig according to claim 1, comprising:
a suction unit configured to suck foreign substances generated by laser cutting the uncoated portion passing the first support unit.

7. The jig according to claim 6,
wherein the suction unit is provided outside the first support unit along a direction from the second support unit toward the first support unit.

8. The jig according to claim 7,
wherein the suction unit is configured to suck the foreign substances along a direction from the second support unit toward the first support unit.

9. The jig according to claim 6,
wherein the first support unit has a foreign substances discharge portion that communicates with the laser receiving portion.

10. The jig according to claim 9,
wherein the suction unit is configured to suck air in the foreign substances discharge portion.

11. The jig according to claim 1, comprising:
a scattering blocking unit configured to prevent foreign substances generated by laser cutting the uncoated portion passing the first support unit from scattering into the coated portion.

12. The jig according to claim 11,
wherein the scattering blocking unit is disposed in a boundary area of the first support unit and the second support unit, and is spaced apart from the first support unit and the second support unit so as to maintain a certain distance from the electrode.

13. The jig according to claim 1, comprising:
a blower unit configured to prevent foreign substances generated by laser cutting the uncoated portion passing the first support unit from scattering toward the second support unit.

14. An electrode manufacturing system comprising:
a jig according to any one of claims 1 to 13, and
a laser irradiation device provided at a location corresponding to the laser receiving portion.

15. The electrode manufacturing system according to claim 14,
wherein the laser irradiation device is configured to partially cut the uncoated portion to form a repeated notching pattern on the uncoated portion along the first direction.
